# EUROPEAN PATENT APPLICATION

(11) **EP 0 773 187 A2**
(43) Date of publication of application: **14.05.1997**
(21) Application number: 96117769.8
(22) Date of filing: 06.11.1996
(51) Int. Cl.: B66F 9/07, B65G 1/137

(54) **Case picking system**

(30) Priority: 07.11.1995 US 554496
(71) Applicant: JERVIS B. WEBB INTERNATIONAL COMPANY, Farmington Hills, Michigan 48331-5624 (US)
(72) Inventor: Hankes, William P., Howell, Michigan 48843 (US)
(74) Representative: Tönhardt, Marion, Dr.

(57) **Abstract**

A storage area lift or elevating apparatus comprising a vertical mast connected to a supporting means, which is capable of supporting the mast in a substantially vertical orientation, a platform coupled to the mast in a manner allowing the platform to be positioned up and down along the mast, and an elevating means positioned on the platform for allowing a cargo bearing surface to be adjusted with respect to the surface of the platform were an operator may be positioned.

## Description

### FIELD OF THE INVENTION

This invention relates in general to a storage and retrieval system, and in particular to a system for the manual storage and retrieval of items from a storage matrix.

### BACKGROUND OF THE INVENTION

At present, automated storage areas commonly store items in a storage matrix consisting of one or more vertical storage units. The storage units are divided into rows and columns which define individual storage locations. These storage locations may be sized to handle one or more grouped units such as cases and pallets. Similarly, the automated transfer equipment in these warehouses is typically sized to pick, transfer, and place only full size units. Frequently, loose items, anything less than a unit (i.e. portions of a unit) such as cases, packages, packs and individual cans, bottles, boxes etc.., are required to be transferred retrieved or stored within these types of storage areas. When transfer of these loose items is required in these storage areas, they must be "picked". That is to say, the goods must be manually selected from a storage location or manually placed into a storage location. This is typically achieved by picking a number of loose items from one or more locations and placing them on a pallet to be transferred to another location. This process of manually picking these loose items is time consuming and labor intensive. In addition, the lifting, bending and reaching movements typically required by this manual operation exposes the workers to injuries which lead to lost work time and related costs.

To date, various automated systems have been proposed for retrieving items from storage areas. Such systems often include a guided vehicle equipped with a vertical mast and a lift that is vertically adjustable along the mast. U.S. Patents 5,361,481 (Lloyd et al.), 5,397,211 (Lloyd et al.), 5,170,863 (Devroy), 5,170,713 (Parewski), 5,141,081 (Kregel et al.), 5,091,685 (Sorenson et al.), 5,067,592 (Miskin et al.), 5,056,625 (Miskin et al.), 5,048,642 (Lloyd), 5,044,859 (Sorensen et al.), 5,015,140 (Kling), 4,967,130 (Sorenson et al.), and 4,773,807 (Kroll et al.) are all illustrative of this technology. While systems of this type may be suitable for many applications, they do not address operations where the storage and retrieval of goods is at least partially manual. Other automated systems include carousel type storage matrices wherein the storage matrices are capable of moving horizontally. U.S. patent 3,554,391 (Goodell) relates to a circular storage matrix equipped with a system of conveyors and two types of operator elevating stations one type on the inside of the storage unit and several of another type positioned on the outside. The operator elevating stations on the outside comprise parallel columns mounted to the floor which form a fixed mast which supports a vertically movable lift suitable for supporting an operator, wherein said lift has arranged thereon a table which provides an area for placement of items. The platform lifts in Goodell have none adjustable storage surfaces which present problems for the operator because the operator must lift the items in order to stack one on top of the other. It is easy to see how systems like these could result in lost time and unnecessary expense, particularly, in environments where the articles being picked are heavy and/or bulky.

We have surprisingly reduced or substantially overcome one or more of the aforementioned problems.

It is therefore an object of the present invention to provide a system for the storage and retrieval of items from a storage matrix, wherein the device used for storage and retrieval is designed in such a way that a worker is not required to lift, bend or stretch as he transfers items to and from the storage matrix.

It is another object of this invention to provide a system for the storage and retrieval of loose items within an automated storage area, wherein the system comprises a lifting device that provides a worker full access to the storage area wherein such lifting device is mounted on a carriage and comprises an area for the worker, a movable cargo bearing surface that is affixed to the lift but is capable of being raised and lowered with respect to the area where the worker is positioned, and a means for allowing the operator to control the movements of the platform, carriage and cargo bearing surface.

It is still another object of this invention to provide a device for assisting the workers in a warehouse having elevated shelving wherein such device is capable of lifting and moving workers about such shelving while providing a storage surface that may be raised and lowered, with respect to the surface on which the worker is positioned, such that this storage surface may be indexed up or down depending on the height of the items stacked within the instant storage location without lifting.

It is yet another object of this invention to provide an apparatus for assisting the workers in a warehouse having horizontally movable storage carousels wherein such apparatus is capable of lifting workers vertically about the carousel while providing a storage surface that may be raised and lowered with respect to the surface on which the worker is positioned.

These and other objects of the present invention will become readily apparent after studying and understanding the present invention, as hereinafter described.

### SUMMARY OF THE INVENTION

The present invention is an apparatus for the storage and retrieval of items in a storage area having elevated storage. The apparatus comprises a substantially vertical mast affixed to supporting means capable of maintaining the mast in a substantially vertical orientation. A platform movably connected to the mast capable of traversing up and down along the mast. The platform provides an area for one or more workers to either sit and/or stand. The platform also provides an adjustable cargo bearing surface mounted on an elevating means connected to the platform. The elevating means adjusts the height of the cargo bearing surface with respect to the platform. The adjustable cargo bearing surface is capable of being positioned in such a way that a worker is not required to lift, bend or stretch as he transfers items to and from the storage locations and the cargo bearing surface.

### BRIEF DESCRIPTION OF THE DRAWINGS

FIG. 1 is a plan view of the apparatus of the present invention positioned within a storage area; and
FIG. 2 is a side elevation of the apparatus of the present invention positioned in front of a storage matrix.

### DETAILED DESCRIPTION OF THE INVENTION

Before the invention is explained in detail, it is to be understood that the invention is not limited in its application to the details of construction and the arrangements of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

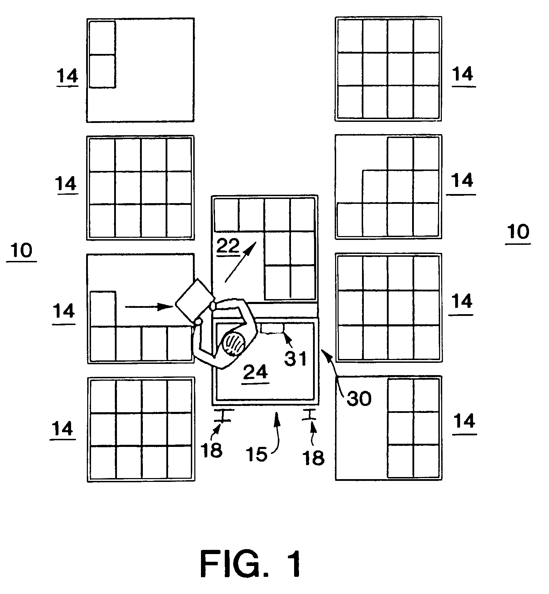

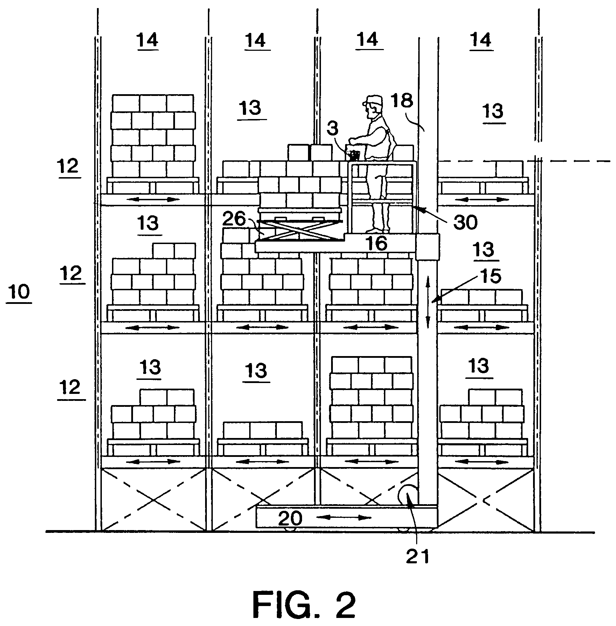

FIGS. 1 and 2 illustrate one embodiment of the storage system of the present invention. The system consists of a plurality of storage matrices **10** which are divided into a plurality of rows **12** and columns **14**. The rows and columns define a plurality of storage locations **13** into which the articles to be stored may be placed. The storage matrices may be constructed from concrete, metal, wood or combinations of these materials, however, any suitable building material may be used. In addition, these storage matrices may be capable of moving either horizontally or vertically. These movable storage matrices may move in either a continuous loop or in a reciprocating fashion.

The system also includes at least one lift or elevator apparatus **15** which is used to move at least one worker and storage items to an appropriate location about a storage matrix so that such items can be transferred to and from a storage location. In one embodiment, the lift consists of a platform **16** which is vertically adjustable along a substantially vertical mast **18**. The lift allows a worker positioned on the platform to be moved in a vertical direction by an elevating means **21**. In systems comprising stationary mast lifts, the storage matrices typically will be movable. These matrices can be moved by any one of a number means known in the industry for this purpose. Typically, the matrices will be driven, by a power source, such that any column of storage locations can be positioned adjacent to the fixed mast lift. Alternatively, the lift can be connected to any means capable of supporting the mast including a base attached or resting on the floor or a carriage **20** that is capable of moving horizontally in two or more directions across the floor of the storage area.

Several types of carriages are known to the art which are suitable for use in the present invention. Such carriages include vehicles driven by electric motor or combustion engine, as well as carriages that are partially or fully automated guided vehicles (AGVs). These electronically guided carriages may be guided by any known guidance system including: magnetic fields, radio signals, or optics. The carriages may also be guided by rails positioned in or on the floor of the storage area.

On the top surface of the platform there is at least one area **24** for a worker and at least one height adjustable cargo bearing surface **22**. The cargo bearing surface is provided with an elevating means **26** which is capable of vertically moving the cargo bearing surface to a desired height with respect to the work area. Various elevating means are known which are suitable for this purpose. Such devices include presses and jacks that are mechanical, electro-mechanical, hydraulic, or combinations of these. The elevating means can be manipulated by a control means **31** operated by a worker positioned on the platform, so that the cargo bearing surface can be quickly and accurately raised to a desired height by an electro-hydraulic scissors jack. The control pad may also be used to manipulate the height of the platform and, optionally, the movement of the carriage about the floor. The platform typically consists of at least one work area, suitable for at least one worker, which is at least partially surrounded by a protective railing **30**.

The mast may be any rigid structure capable of supporting the platform in a more or less horizontal orientation. There are many types of structures and materials suitable for this purpose such as single and multi-beam steel structures, telescoping structures and wood and/or concrete structures.

It is known in the art numerous ways of having a platform engage a vertical mast such that it may be moved along the mast while remaining secure. These may include, but are not limited to, manual or power assisted rachet systems, chain driven systems, wire rope hoists, and rack and pinion systems. These powered systems may be powered by a separate source dedicated for the movement of the platform or by a power source used to move the cargo bearing surface and/or optionally the carriage. The power source may be of any type suitable for this purpose including reversible or unidirectional electric motors or combustible engines.

The apparatus of the present invention may additionally comprise a control system which allows all or some of the movable components to be controlled either remotely or on the apparatus. The controls for the apparatus may be positioned in one or more of the following areas: either the carriage, the platform or some remote location. Typically, the lift will be equipped with a control panel accessible by the operator while positioned on the platform. This control panel will, typically, enable the operator to control all movements of the apparatus and may include the ability to control the movement of the storage matrix.

The storage system may also be equipped with an inventory control system which monitors the location, quantity, and type of items in a particular location within the storage area and throughout the storage area. This control system may control all or part of the equipment within the storage area. A control system of this type may also control the indexed movements of the cargo bearing surface based on the inventory quantities within the storage location currently being addressed such that the cargo bearing surface is continually adjusted to maintain the loading surface at a desired height.

In operation, both the storage matrix and the apparatus are positioned to the appropriate location where the storage and/or retrieval operation is to take place. The platform is adjusted to a position on the mast adjacent to the appropriate storage location, and the cargo bearing surface is adjusted by the elevating means so that a transfer pallet disposed on the cargo bearing surface is even with the bottom surface of the items to be transferred from the storage location. When it is desired to transfer items from the cargo bearing surface to a storage location, then the cargo bearing surface is adjusted so that the bottom surface of an item to be removed is level with the top surface where such item is to be transferred.

The invention may also be carried out by maneuvering a carriage mounted lift so that a worker, positioned on the platform, can access a particular column of storage locations. Then adjusting the platform in a vertical direction until the worker is capable of accessing a particular storage location. Finally, the cargo bearing surface can be adjusted so that the upper surface on the cargo bearing surface, which may be the top of a pallet or the top of items stacked on the cargo bearing surface, is about level with the worker's abdomen. This will enable the worker to transfer items by sliding them to the desired location without having to bend, stretch, or lift the items. As items are stacked on the cargo bearing surface the height of the surface is lowered by the elevating means so that this surface is maintained about level with the operator's abdomen.

Of course, the steps in these operations may be performed in any order and/or simultaneously and some or all the steps may be reversed depending on the operation to be performed.

## Claims

1. An apparatus comprising a mast attached to a supporting means, for holding the mast in a substantially vertical orientation, a platform movably coupled to said mast capable of traversing along the length of said mast, wherein said platform is capable of supporting at least one human and at least one cargo lift, wherein said cargo lift is mounted on said platform and comprises a cargo bearing surface positioned on an elevating means for raising and lowering said cargo bearing surface with respect to said platform.

2. An apparatus as claimed in claim 1, wherein said elevating means is a mechanical jack.

3. An apparatus as claimed in claim 1, wherein said elevating means is a scissors jack.

4. An apparatus as claimed in claim 1, wherein said support means is a carriage for moving about the floor.

5. An apparatus as claimed in claim 1, wherein said platform remains in a substantially horizontal orientation.

6. An apparatus as claimed in claim 1, wherein said cargo bearing surface remains in a substantially horizontal orientation.

7. An apparatus as claimed in claim 1, wherein said mast is formed from steel beams.

8. An apparatus as claimed in claim 1, wherein said platform is manually positioned along said mast.

9. An apparatus as claimed in claim 1, wherein said platform is divided into a work area and a cargo area.

10. An apparatus as claimed in claim 9, wherein said work area is at least partially surrounded by a railing.

11. An apparatus as claimed in claim 1, wherein said platform is equipped with control means for controlling the height of said elevating means.

12. An apparatus as claimed in claim 11, wherein said controlling means controls said elevating means such that as a layer, formed by one or more items, is positioned on said cargo bearing surface said elevating means is adjusted downwardly such that the surface formed by said layer is level with the bottom of an item to be transferred onto said layer.

13. An apparatus as claimed in claim 11, wherein said controlling means controls said elevating means such that as a first layer, formed by one or more items, positioned on said cargo bearing surface is removed said elevating means is adjusted upwardly such that the bottom surface of a second layer, formed by one or more items, is level with the surface onto which an item composing said second layer is to be transferred.
